# EUROPEAN PATENT SPECIFICATION

(11) **EP 4 493 862 B1**
(45) Date of publication and mention of the grant of the patent: **12.08.2026**
(21) Application number: 23709981.7
(22) Date of filing: 07.03.2023
(51) Int. Cl.: F24H 4/02, F24H 9/02, F24H 9/06

(54) **HEATING DEVICE COMPRISING A FLOW GUIDING APPARATUS**
HEIZVORRICHTUNG MIT EINER STRÖMUNGSLEITVORRICHTUNG
DISPOSITIF DE CHAUFFAGE COMPRENANT UN APPAREIL DE GUIDAGE D'ECOULEMENT

(30) Priority: 14.03.2022 EP 22161873; 21.03.2022 EP 22163167; 21.03.2022 EP 22163164; 01.04.2022 EP 22166330; 01.04.2022 EP 22166331; 01.04.2022 EP 22166332; 06.12.2022 EP 22211748
(43) Date of publication of application: 22.01.2025
(73) Proprietor: BDR Thermea Group B.V., 7332 BD Apeldoorn (NL)
(72) Inventor: DANIEL, Cyrille, 7332 BD Apeldoorn (NL); CROUVIZIER, Geoffrey, 7332 BD Apeldoorn (NL); CHASSAGNARD, Benjamin, 7332 BD Apeldoorn (NL); ANTOINE, Florian, 7332 BD Apeldoorn (NL); KUBASIK, Sébastien, 7332 BD Apeldoorn (NL)
(74) Representative: Grabovac, Dalibor
(86) International application number: PCT/EP2023/055641
(87) International publication number: WO 2023/174740

(56) References cited:
- EP-A1- 3 128 252
- CN-A- 104 266 354
- DE-A1- 2 558 227

## Description

The invention relates to a heating device comprising a flow guiding apparatus. In particular, the invention relates to a heat pump water heater using a flammable refrigerant.

A heating device like a heat pump is a device able to warm a closed space of a building or to warm domestic hot water by transferring thermal energy from a source to another. An air-source heat pump water heater is a device using the heat pump technology to use energy from air to heat the domestic water contained in a tank. This is obtained using a refrigeration cycle carried out in the opposite direction of the heat transfer. Among the different refrigeration cycles, the most widely used is the vapor compression refrigeration, in which a refrigerant undergoes phase changes.

For a heat pump water heater, vapor-compression refrigeration uses a circulating liquid refrigerant as the medium which absorbs heat from one source, compresses it, thereby increasing its temperature before releasing it in another source. A vapor-compression refrigeration system usually comprises at least a compressor, an expansion valve and, two heat exchangers and a network of pipes connecting these elements and in which the refrigerant circulates. In a heating mode the external heat exchanger is the evaporator and the internal one being the condenser. In particular, the thermodynamic circuit of a heat pump water heater comprises a first stage, or hot stage, including the condenser, and a second stage, or cold stage, including the evaporator. A heat transfer fluid circulates in a closed circuit, wherein this fluid flows in the evaporator at low pressure. At the evaporator outlet, the fluid is compressed by the compressor and flows in the condenser before passing through an expansion valve. The valve lowers the fluid's pressure so that the fluid can return to the evaporator. The condenser is usually arranged in, or around, a water tank in order to determine a heat transfer, whereas the evaporator is crossed by an air circulation path and is coupled to a fan element.

Through the evaporator circulate fluids such as R410A, R-32, R134a, to evaporate/vaporize from liquid to gas within the system while absorbing heat from a source in the process. However, environmental constraints prevent the use of historical refrigerants and lead to the use of new so-called natural fluids. These fluids are highly flammable and can therefore generate risks of explosion in the event of a leak in an electrical appliance that has not been designed to control this risk. For example, the presence of the compressor and more generally of a source of ignition close to the evaporator can strongly affect the safety of the heating device. An ignition source is an item or substance capable of an energy release sufficient to ignite a flammable fluid. It can be of several natures including hot source and electrical, mechanical or chemical activation energy.

As mentioned above, to operate, the heat pump circuit needs an expansion valve. The function of the expansion valve is to expand the refrigerant from high pressure to low pressure. This serves also to control the amount of refrigerant released into the evaporator and regulate the superheat of the refrigerant that flows out of the evaporator to a constant and defined value. To do it so, the expansion valve needs a thermal bulb/sensor to regulate the superheat by influencing the flow rate. To absolve this function, the sensor is positioned on the frigorific piping between the evaporator outlet and the compressor inlet. It is isolated from the air flow thanks to insulating means (mainly foam) and is fixed to the piping with a temperature-conducting solution. As this probe cannot be immersed in the refrigerant, it is placed in contact with the conductive tube in which circulates the refrigerant. This can be achieved for example by using a copper (for high thermal conductivity) housing soldered, screwed or clipped onto the refrigerant circuit, by using an adhesive with a temperature-conducting aluminium surface or by using a thermally conductive adhesive paste.

However, based on the arrangement of the components of the heating device, the expansion valve could not function correctly. For example, in designs where the evaporator is confined in a region where air flow is prevented from cooling more elements than necessary, especially the compressor and the refrigerant pipes going from the compressor to the condenser (useful heat), it would be reasonable to place the temperature sensor of the expansion valve on the piping located outside the air flow in order to not have any deviation due to the air temperature. However, this would lead to a malfunctioning of the expansion valve. As a matter of fact, the temperature read by the temperature sensor is biased because the compressor will heat the piping and therefore the probe by conduction. Moreover, as there is no air circulation allowing thermal convection around all the components of the heat pump (and in particular the compressor and frigorific piping associated), the whole environment increases in temperature. It is therefore necessary to position the temperature sensor in a place where the temperature read by the probe will not be biased by external behaviours that would distort the read temperature value of the refrigerant (as the heating of the compressor). Indeed, if the sensor overheats, it would act like if there is not enough fluid in the evaporator and open the expansion valve.

When opening the hot gas valve, there is no overheat identified so the expansion valve would act like if there is too much fluid in the evaporator and close the expansion valve.

EP3128252A1 describes a heat pump system arranged to separate the air flow, from which the evaporator exchanges heat, from the compressor, by providing a formed channel with runs from in inlet in a top surface of the heat pump to the inflow side of the evaporator.

DE2558227A1 describes an electric boiler comprising a heat pump in the form of an air cooling system with an evaporator mounted above a water tank with a separate air inlet and outlet and an associated fan.

It is therefore desirable to obtain an apparatus or system able to control the situation of leakage of flammable fluid at the evaporator and at the same time able to correctly monitor the temperature of the refrigerant fluid for a correct functioning of the expansion valve.

The object is solved by a heating device, in particular a heat pump water heater arranged to use a flammable refrigerant and comprising at least a heat exchanger, a compressor element, an expansion valve and a temperature sensor connectable to the expansion valve for monitoring the temperature of the refrigerant flowing out the heat exchanger, and further comprising a flow guiding apparatus comprising a housing couplable to a casing of the heating device and comprising an air inlet and an air outlet, the housing defining an air flow region, wherein the housing is configured so that the heat exchanger is arranged inside the air flow region for exchanging heat in said air flow region, so that in operation air is guided to flow from the air inlet to the heat exchanger and from the heat exchanger to the air outlet, the air being confined in the air flow region and being prevented from being in contact with the compressor element and the expansion valve that are arranged outside the air flow region, and the temperature sensor connectable to the expansion valve is arranged inside the air flow region.

Advantageously, the apparatus can be integrated in a heat pump water heater and the heat exchanger is an evaporator operating with a flammable refrigerant heavier than air. That means, the heat exchanger, in particular evaporator, exchanges heat form the air to the refrigerant. The housing is shaped such that it accommodates the evaporator and guides the air flow passing through the evaporator in a closed air flow region thereby preventing any possible leakage of flammable refrigerant fluid present in the evaporator, thereby preventing any possible contact with other components of the heating device (hot source or with activation energy), e.g. the compressor, that could trigger an explosion.

Moreover, this apparatus allows a more accurate reading of the refrigerant temperature, thereby allowing the expansion valve to close faster and avoid fluid migration when the system is off. Moving the temperature sensor away from the compressor avoids overheating of the sensor when the compressor is off, which would open the expansion valve and encourage the migration of the fluid (rising from the condenser). In particular, this reduces the pump down time of the compressor.

In addition, thanks to this apparatus, the heat from the compressor that is lost during this circuit cooling is recycled and used to warm the air entering the evaporator. This improves the exchange performance of the evaporator as more energy is available.

In one example, the temperature sensor is attached to a piping portion containing the refrigerant flowing from the heat exchanger to the compressor element, and the housing comprises a piping port for the passage of said piping portion inside the air flow region. In other words, a portion of the piping containing the refrigerant is deviated in order to enter and exit the air flow region.

By circulating part of the refrigerant circuit between the evaporator and the compressor in the air flow region, the tubes of this piping portion are cooled by convection and are therefore not affected by the operating temperature of the compressor. Thus, the temperature read by the sensor in contact with the refrigerant tube of said piping portion is the temperature of the fluid and is not biased by the temperature relayed by the compressor. This accurate reading of the refrigerant temperature allows the heat pump system to operate correctly. Indeed, having the temperature sensor in a cooler environment prevents the expansion valve to open and to close too frequently and irrelevantly due to misinterpretation of the state of the system.

The piping port can be located in a zone delimiting the air flow region, i.e. can be located between a zone inside the air flow region and a zone outside said air flow region.

In another example, the piping portion comprises an inlet piping and an outlet piping, the temperature sensor being located between the inlet piping and the outlet piping and the piping port comprises a gasket element for supporting the inlet piping and the outlet piping. The inlet piping is a section of the piping portion entering the air flow region, whereas the outlet piping is a section of the piping portion exiting the air flow region. The piping portion can have a coil shape, wherein the inlet point of the inlet piping and the outlet point of the outlet piping are close to each other, in particular are both located to the piping port at the gasket element. Advantageously, the gasket element comprises two through holes for the passage of the inlet piping and the outlet piping. It is noted that the gasket element can also serve to seal the pipe. In that case it is configured to avoid the transmission of vibrations from the piping. In other words, as the compressor vibrates, the compressor can transmit vibration to the piping. In this case, abrasion between the piping and the gasket is preferably to be reduced, in particular avoided. Advantageously, the gasket can therefore be made of a soft or flexible material. A soft or flexible material in accordance with the present invention is preferably defined as a material that has a tensile elongation in elastic behavior of at least 10%. In other words, for the determination of such an elastic behavior, a tensile stress is applied to the material until it is elongated by at least 10% and then it has to return to its original length without deformation. The tensile elongation value is determined according to ISO 1798 and DIN 53571. A suitable material is for example polyethylene foam. A suitable material, in particular polyethylene foam, preferably has a Young Modulus between 0 MPa and 100MPa, in particular between 1 MPa and 100 MPa, in particular 5 MPa to 20 MPa. The values in MPa refer to the Young Modulus determined at 3% compression in dependence of g/l (gram per liter). The Young Modulus is determined according to ISO 844. Alternatively or additionally, the interface points between the gasket and the piping can be vibration-damped. Suitable means for vibration damping can be for example elastomeric rings.

In an additional example, the housing is shaped to place the temperature sensor in the air flow region, wherein the air is guided to flow from the air inlet to the heat exchanger. In this way, overheating of the temperature sensor is avoided.

In an example, the temperature sensor can be an electronic sensor or a mechanical sensor. The sensor can be electronically connected to the expansion valve for monitoring at least one temperature dependent value. The temperature sensor can be a so called sensing bulb containing a liquid which expands depending on the temperature of the piping. This bulb is fluidly connected to the expansion valve so that when the temperature of the bulb rises, the liquid expands and this expansion pushes a part directly into the expansion valve to close or to open it.

According to an example, the housing comprises a first component for holding the heat exchanger and the compressor element connectable to the heating device and a second component connectable to the heating device to form the air flow region. Advantageously, the two components are configured to physically separate the heat exchanger and the temperature sensor located in the air flow region from the compressor element. For example, the first component can surround, at least partially, the compressor element and the second component can surround, at least partially, the heat exchanger and the temperature sensor. It is noted that the both the first component and the second component can be directly connected to a portion of the heating device or indirectly connected to a portion of the heating device, i.e., by means of an interposed element.

In one example, the second component is at least in part fixable to, and removable from, the first component, the first component and the second component being both shaped to guide air to flow from the air inlet to the heat exchanger and from the heat exchanger to the air outlet. Specifically, the first component can be the bottom component of the housing and the second component can be the top component of the housing, wherein the first component represents a base on which several elements of the heating device can be accommodated and/or fixed. For example, the evaporator, the compressor, the expansion valve and the fan element can be accommodated on the second component of the housing. The second component is configured to be coupled to the first component and acts as a sort of cap and is used to separate the evaporator (and the fan element) from other elements present and arranged on the first component, such as the compressor. In addition to isolating the evaporator (and the fan element) from other elements of the heating device, by coupling the first component to the second component an air flow region is built in order to guide the air flow from the air inlet to the evaporator and from the evaporator to the air outlet. The first and second component are specifically shaped to confine air in the air flow region and to form a preferred path from the air inlet to the air outlet passing through the evaporator.

To fluidically isolate the evaporator and the temperature sensor from other elements of the heating device that could trigger an explosion in case of leakage of the flammable refrigerant fluid and that could determine an overheating of the sensor, the first component is connected to the second component to form a connecting region that is airtight and/or watertight. In this way, the apparatus ensures a good seal between the evaporator and the heating device, thereby improving the overall performance of the device. Indeed, if the heating device stops, the outside air penetrates into the apparatus but is confined in the housing. This apparatus is positioned within the overall heating device casing, providing two layers of thermal insulation.

In one example, the first component and the second component are one-piece parts. This facilitates the manufacturing of these components and strongly reduces the risk of fluid passage from inside the housing in the air flow region and to outside the housing (of course with the exception of the air flowing through the air inlet and air outlet).

In another example, the first component and the second component are both shaped to form a first seat, in particular for the placement of the heat exchanger. The first component comprises a recess where to fix, e.g. to slot in, the base of the evaporator and the second component comprises an internal concave region to accommodate, at least in part, the top of the evaporator.

In an additional example, the first component and the second component are both shaped to form a second seat, in particular for the placement of a fan element. Similar to the case of the first seat, the first component can comprise a recess where to fix, e.g. to slot in, the base of the fan element and the second component can comprise an internal concave region to accommodate, at least in part, the top of the fan element.

In a further example, the housing can comprise a base component interposed between at least the first component and the heating device to fix said first component to the heating device. In addition or in alternative, the housing can comprise a base component interposed between at least the second component and the heating device to fix said second component to the heating device.

In another example, the first component and the second component form a one-piece structure.

In one example, the air inlet and the air outlet are located on the second component and the heat exchanger and the compressor element are fixable to the first component. Advantageously, the connection of the first component with the second component produces a physical separation between the compressor and the evaporator, although they are both located on the same supporting base, i.e., the first component.

Alternatively, the heat exchanger and the compressor element can be fixable to a base element interposed between at least the first component and/or the second component, and the heating device.

In an example, the apparatus further comprises a condensate drain outlet coupled to the heat exchanger to evacuate condensate resulting from heat exchange at the heat exchanger. In this way, the condensate resulting from the heat exchange at the evaporator can be safely evacuated.

In case the condensate drain is not properly functioning, i.e., it is obstructed, the apparatus can further comprise a safety drain outlet located in a bottom region of the housing to evacuate a fluid from the air flow region to the outside. For example, the safety drain outlet can be located in the first component of the housing. Accordingly, even if the condensate drain outlet is blocked by water, the, in particular flammable, refrigerant fluid will be able to escape through the safety drain outlet. This outlet is positioned at a low point and far from electronic devices, which ensures that the fluid will never fill the housing and risk entering the rest of the heating device environment or go to electronic devices.

In another example, the air inlet and the air outlet are both located in a top or lateral region of the housing. In a different configuration, the air inlet can be located in the top region, whereas the air outlet in the lateral region, or vice versa. The different location of the air inlet and outlet affects the shape of the housing, i.e. the shape of the first and second components of the housing in order to form the air flow region able to efficiently guide the air from the air inlet to the evaporator and from the evaporator to the air outlet.

In an further example, in order to make the apparatus compatible with the environment of the heating device, the housing is made of a polymeric material, in particular of foam plastic, more particularly of polypropylene expanded (PPE). Specifically, both the first and the second component are made of polymeric material, in particular of foam plastic, more particularly of polypropylene expanded (PPE).

In an additional example, in order to optimize air flow and limit aeraulic disturbances, an air duct connecting the air inlet to the air outlet comprises a variable cross-section. In particular, the cross-section of the air duct at the air inlet and at the air outlet can be different from the cross-section at the heat exchanger, wherein in particular the cross-section of the air duct at the air inlet and at the air outlet can be circular or cylindrical and the cross-section at the heat exchanger can be polygonal or angular shaped. Specifically, the air duct can have a progressive cross-section, for example increasing from the air inlet to the evaporator and decreasing form the evaporator to the air outlet.

In another example, the heating device further comprises at least a fan element, in particular a brushless fan, arranged inside the air flow region and coupled to the heat exchanger. In this way, the fan element is accommodated in the housing and, similarly to the heat exchanger, separated from the other elements of the heating device. The fan element serves to optimize the flowing of the air in the air flow region. Advantageously, the fan element can be placed downstream of the evaporator in the air flow region due to a lower air mass volume of the air. However, the fan element can also be placed upstream of the evaporator. In this way, it possible to manage refrigerant leaks at the evaporator regardless of the state of the heating device. **If** the fan element is running, the leak will be extracted from the air duct through the air outlet. If the fan element is off, since the refrigerant fluid is heavier than air, this fluid can escape through the condensate drain outlet and/or the safety drain outlet.

In an example, the air flow region comprises an air flow sub-region located between the fan element and the heat exchanger, the housing in said air flow sub-region being shaped to guide air from the heat exchanger to the air outlet. In the air flow sub-region the first and second components are shaped to form a volute structure to improve the fan element performances. Also, in this air flow sub-region the first and second components are shaped to form conduit to improve the air flow guiding from the evaporator to the fan element.

According to another example, to increase the safety of the heating device, any ignition source is arranged outside the air flow circulating region, i.e. outside the housing.

In an example, at least a portion of the housing is part of the heating device. The apparatus can be composed of specific parts or can be integrated with parts that are also used for the structure of the heating device, such as a heat pump base or the outer casing of the heat pump. In particular, the apparatus can therefore be located inside the heating device and covered by the casing parts or be part of the casing itself.

In another aspect of the invention, a heating device, in particular a heat pump water heater using a flammable refrigerant, is provided, the heating device comprising the inventive apparatus. In particular, the heating device comprises at least a heat exchanger, a compressor element and an expansion valve and a temperature sensor connectable to the expansion valve for monitoring the temperature of the refrigerant flowing out the heat exchanger, wherein the heat exchanger and the temperature sensor are located inside the air flow region in the housing of the apparatus and the compressor element and the expansion valve are located outside said air flow region in the housing of the apparatus.

In one example, the temperature sensor is attached to a piping portion with a material having a thermal conductivity higher than 1 W/(m*K). Also, the temperature sensor can be covered by a thermal insulation material, in particular an insulation foam, wherein in particular the thermal insulation material has a thermal conductivity lower than 0.1 W/(m*K). In addition, a piping portion on which the temperature sensor is attached can have a length of at least 5 cm.

According to a further example, the heating device comprises a capping element configured to be coupled to a top region of the heating device and covering the housing of the apparatus, the capping element comprising a first opening coupled to the air inlet of the housing and a second opening coupled to the air outlet of the housing, wherein between the first opening and the air inlet and between the second opening and the air outlet are provided sealing means.

In a further aspect of the invention, a use of the inventive flow guiding apparatus is provided. The inventive flow guiding apparatus is used in a heating device, in particular a heat pump water heater using a flammable refrigerant.

In the figures, the subject-matter of the invention is schematically shown, wherein identical or similarly acting elements are usually provided with the same reference signs.
- Figure 1: shows a schematic representation of the flow guiding apparatus according to an example.
- Figures 2A-B: show a perspective view of the apparatus with and without the second component according to an example.
- Figures 3A-B: show a perspective view of the apparatus with and without the second component according to an example.
- Figure 4A-B: show two perspective views of the temperature sensor attached to the piping portion according to an example.
- Figures 5A-B: figure 5A shows a cross-section view and figure 5B shows a perspective view of the heating device and the capping element according to an example.

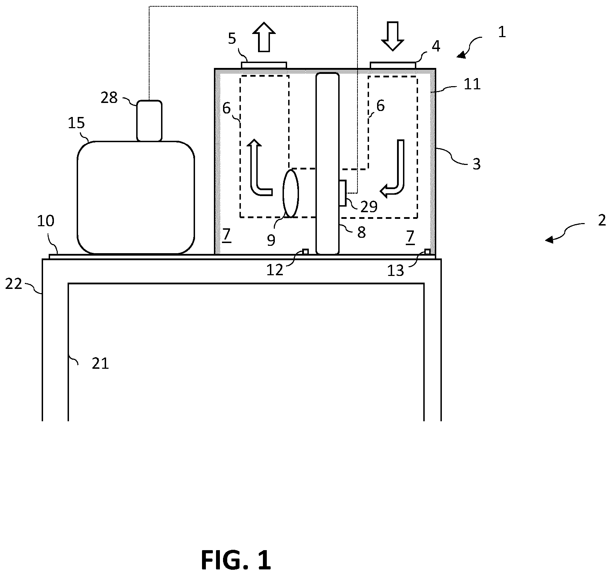

Figure 1 illustrates the apparatus 1 for guiding the air flow in a schematic representation. The apparatus 1 can be coupled to a heating device 2, for example a heat pump water heater. The heating device 2 comprises at least one heat exchanger such as an evaporator 8 to absorb heat from the air and transfer it to the refrigerant fluid circulating in said evaporator 8. Thus, the fluid will be able to change from an at least partially liquid to a gaseous state. The evaporator 8 is crossed by an air circulating path receiving air from outside. The air can be ambient air or stale air from domestic rooms via ventilation ducts. The fluid at low pressure is conducted to a compressor 15 coupled to the evaporator 8 and is then directed to another heat exchanger, such as a condenser (not shown in the figure) for a heat transfer with a water tank 21. The device 2 comprises also an expansion valve 28 to expand the refrigerant from high pressure to low pressure, the expansion valve 28 being connected to the evaporator 8 through a piping (not shown in the figure). The expansion valve 28 is electronically connected to a temperature sensor 29 for monitoring the refrigerant temperature, the temperature sensor 29 being attached to a portion of the piping connecting the evaporator 8 to the compressor 15 (not shown in the figure. The evaporator 8, the expansion valve 28, and the compressor 15 are located on a top region of the heating device 2 and the water tank 21 is located in a bottom region of the heating device 2 inside a casing 22. Alternatively, the connection between the expansion valve 28 and the temperature sensor 29 is not electronic. For example, the connection can be provided by a capillary piping with fluid which expand inside it depending on the temperature of the sensor/bulb.

The apparatus 1 comprises a housing 3 having a first component 10 and a second component 11. It is noted that the first component 10 represents a base element on which several elements of the heating device are arranged. The first component 10 can be fixed to the top of the casing 22 of the heating device 2. The second component 11 is, on the other hand, a capping structure that can be fixed to, and removed from, the first component 10. Alternatively, the first component 10 and the second component 11 could form a single part. The second component 11 is schematically illustrated in figure 1 with a grey border. It is noted that according to the figure, when the second component 11 is coupled to the first component 10, the second component 11 is not configured to completely cover/cap the entire surface of the first component 10. As a matter of fact, when the second component 11 is coupled to the first component 10, an air flow region 7 is formed and some of the elements arranged on the first component 10, such as the compressor 15 and the expansion valve 28, are located outside said region 7, whereas other elements, such as the evaporator 8 and the temperature sensor 29 are located inside the air flow region 7. Alternatively, the second component 11 can completely cover the surface of the first component 10. In this case, the second component 11 could also function as a capping of the heat pump compartment and could comprise at least two separated closed regions containing the air flow region 7 and the compressor 15 and expansion valve 28, respectively.

The housing 3 comprises an air inlet 4, an air outlet 5 and an air duct 6 connecting the air inlet 4 to the air outlet 5. It is noted that the air duct 6 comprises a first sub-duct comprised between the air inlet 4 and the evaporator 8 and a second sub-duct comprised between the evaporator 8 and the air outlet 5. Environmental air at a certain temperature enters the air inlet 4, crosses the evaporator 8, and exits the air outlet 5 at a lower temperature. To improve the air conduction to the air outlet 5, a fan element 9 is located downstream of the evaporator 8 in the portion of the air duct 6 between the evaporator 8 and the air outlet 5.

The use of the apparatus 1 in a heating device 2, like a heat pump unit of a thermodynamic water heater operating with a flammable refrigerant heavier than air, is very useful. As a matter of fact, the apparatus 1 does not incorporate any ignition source (hot source or with activation energy). This apparatus 1 has a housing 3 allowing an air flow to enter and exit the apparatus 1 passing through the evaporator. Since the apparatus 1 is sealed from the rest of the heat pump compartment, it prevents the transfer of fluids (flammable gas in the event of a leak, water from condensate, air flow, etc.) to other element that are not in the housing 3. This avoids the risk of ignition in the event of a gas leak in the circuit contained in housing 3 or rather in the air flow region 7. It also improves the acoustics of the product thanks to an efficient and leakage-free airflow control since the noise waves from the operating compressor 15 must pass through surfaces before propagating to the outside of the product, either through the said compartment to reach the vents, or through the casing of the compressor 15. This also avoids water stagnation and corrosion. As a matter of fact, trenches and openings are included in the room to allow for fluid flow. This also improves the performance of the compressor 15 and the product in general as the compressor 15 is not cooled by air from the air vents. In particular, a condensate drain outlet 12 is located between the bottom of the fan space and the evaporator space to allow for water flow (splash, condensation, etc.). In order to cope with the possibility of an obstruction of the condensate drain outlet 12, an additional opening, i.e., a safety drain outlet 13, is present at a lower level than air outlet 5 and air inlet 4.

In addition, the position of the temperature sensor 29 in the air flow region 7 prevents the overheating of said sensor, for example due to the proximity of hot elements, which may cause convection or heating due to the conductive nature of the copper piping connected to hot elements, such as the compressor 15.

The housing 3, i.e., the first component 10 and the second component 11, is made of a material compatible with this environment and is preferably made of foamed plastic such as expanded polypropylene.

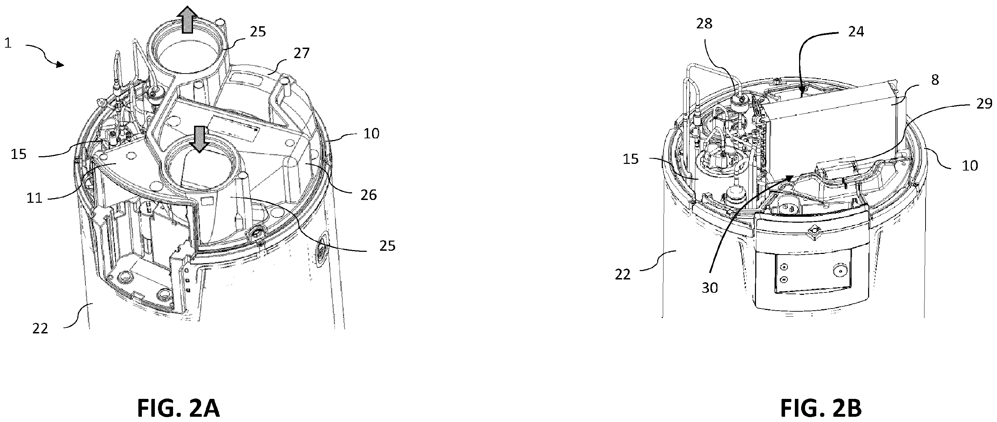

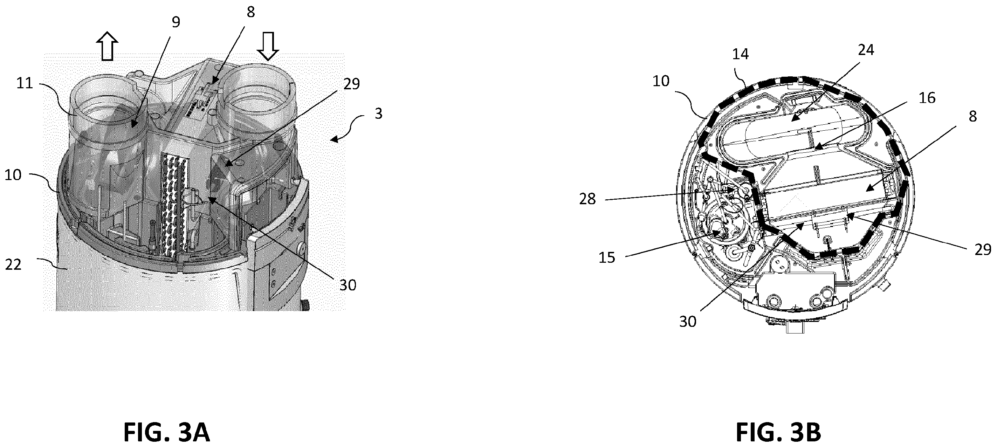

Figures 2A-2B and 3A-3B illustrate a perspective view of the apparatus 1 coupled to a heating device 2, in particular coupled to the top portion of the casing 22 of the heating device 2. Figures 2A and 2B show a first configuration, wherein the second component 11 is coupled to the first component 10 (Fig. 2A) and a second configuration, wherein the second component 11 is removed from the first component 11 (Fig. 2B). Also in combination with figure 1, it is noted that the second component 11 is a sort of convex cap suitably shaped to allow the arrangement of elements, such as the evaporator 8, the temperature sensor 29 and fan element 9 (only the corresponding fan seat 24 is shown in the figure) inside the housing 3, and to form an air duct 6 from the air inlet 4 to the air outlet 5 passing through the evaporator 8. For example, the second component 11 has an air flow portion 25 at the air inlet 4 and air outlet 5, the air flow portion 25 having a cylindrical shape. Also, the second component 11 has an evaporator portion 26 at the evaporator 8, the evaporator portion 26 having a polygonal outline to allow the arrangement of the upper part of the evaporator 8 that usually has a parallelepiped form (see figure 2B). Additionally, the second component 11 has a fan portion 27, having a curved shape to allow the arrangement of the upper part of the fan 9 that usually has a circular form. In a similar way, the first component 10 is suitably shaped to allow the arrangement of elements, such as the evaporator 8, the temperature sensor 29, and fan element 9 inside the housing 3, and to form an air duct 6 from the air inlet 4 to the air outlet 5 passing through the evaporator 8. Figure 2B shows for example that the first component 10 is provided with a dedicated seat (or second seat) 24 for the fan element 9 having a curved shape. An analogous dedicated seat (or first seat) 23 for the evaporator 8 is also provided in the first component 10, this seat 23 having a rectangular, polygonal shape (not shown in the figure). The first seat 23 is a rectangular slot for inserting the lower part of the evaporator 8. This can be clearly derived for example from figure 3B.

By comparing figures 2A and 2B, it is noted that when the second component 11 is removed from the first component 10, different elements of the heating device 2, such as the evaporator 8, the temperature sensor 29, the expansion valve 28, and the compressor 15 are located in the same environment. In other words, air flowing through the evaporator 8 could also pass close to the compressor 15. This is basically the standard situation described in prior art. On the other hand, when the second component 11 is coupled to the first component 10, the evaporator 8 and the temperature sensor 29 are separated from the compressor 15 and the expansion valve 28. The walls of the second component 11 prevent air flowing in the air duct 6 from the air inlet 4 to the air outlet 5 to be in contact with the compressor 15 and to prevent the temperature sensor 29 to be in a overheating environment.

Figure 3A illustrates in detail the coupling of the second component 11 to the first component 10 and the arrangement of elements, such as the evaporator 8, the temperature sensor 29, the piping portion 30 on which the temperature sensor 29 is attached, and the fan element 9, inside the housing 3 in the air flow region 7. To better appreciate the location of the evaporator 8, the temperature sensor 29, the piping portion 30, and the fan element 9, the second component 11 is sketched with a transparency grade.

Figure 3B shows in a top view the evaporator 8 with the temperature sensor 29 on the first component 10 and the second seat 24 dedicated for arranging the fan element 9. An air flow sub-region 16 is located between the evaporator, in particular the first seat 23, and the second seat 24. In this air flow sub-region 16, the housing 3, and in particular the first component 10 and second component 11 are shaped to guide air from the evaporator 8 to the air outlet 5. In the air flow sub-region 16 the first and second components 10, 11 are shaped to form a volute structure to improve the performances of the fan element 9. Also, in this air flow sub-region 16 the first and second components 10, 11 are shaped to form conduit to improve the air flow guiding from the evaporator 8 to the fan element 9.

Figure 3B also shows a connection region 14, represented with a dotted line in the figure, this region 14 being the contact portion between the first component 10 and the second component 11. In other words, the connection region 14 is the external border of the air flow region 7 and defines the outline inside which the elements (e.g. the evaporator 8, temperature sensor 29, piping portion 30, the fan element 9) are confined in the air flow region 7. At the connection region 14, the housing 3 is water-sealed and air-sealed from the rest of the heat pump compartment.

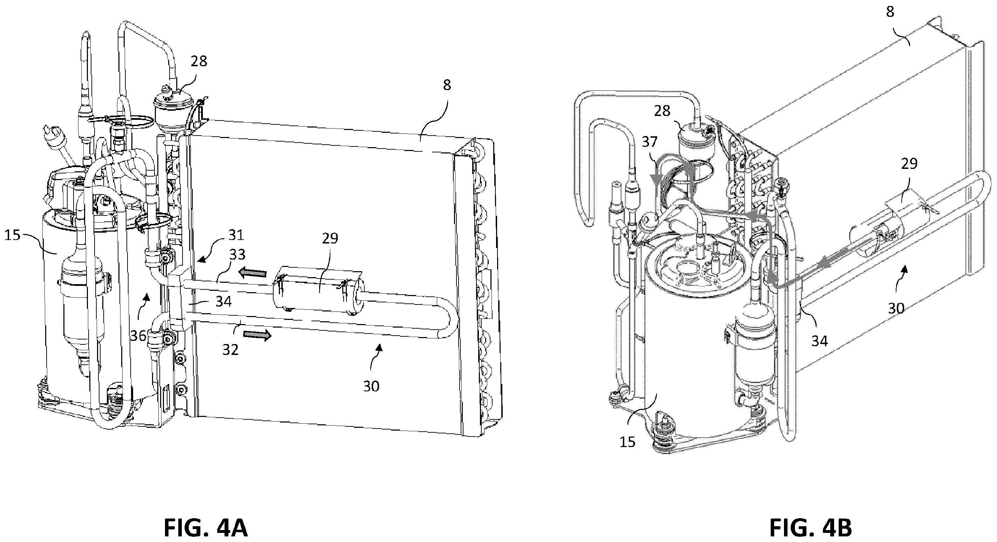

Figures 4A and 4B illustrate the arrangement of the temperature sensor 29 relative to the evaporator 8, the compressor 15 and the expansion valve 28, without the first component 10 and the second component 11 of the flow guiding apparatus 1. It is noted that the piping containing the refrigerant has a piping portion 30 that deviates from a linear path 36 in order to create an additional path close to a surface of the evaporator 8. As explained above and as shown in Fig. 3A, the deviation serves to place the piping portion 30 in the air flow region 7. A piping port 31 in the form of a gasket element 34 delimits the internal area from the external area of the air flow region 7. The gasket element 34 has two through holes for the passage of the inlet piping 32 (containing the refrigerant flowing out the evaporator 8) and the outlet piping 33 (containing the refrigerant flowing to the compressor element 15). To save space, the piping portion 30 has a curved section so that the inlet piping 32 and the outlet piping 33 are parallel and the inlet and outlet point are located in the same area at the piping port 31. The temperature sensor 29 is attached to the piping portion 30 between the inlet piping 32 and the outlet piping 33. In particular, the temperature sensor 29 is attached with a material having a high thermal conductivity (for example > 1 W/(m*K)). The assembly formed by temperature sensor 29 and the attaching material having a high thermal conductivity is covered with an insulation preventing direct impact of the air flow (for example with a therma conductivity lower than 0.1 W/(m*K)). The temperature sensor 29 is a sensing bulb containing a liquid which expands depending on the temperature of the piping. As shown in figure 4B, this bulb 29 is connected to the expansion valve 28 by a capillary piping 37 so that when the temperature of the bulb 29 rises, the liquid expands and this expansion pushes a part directly into the expansion valve 28 to close or to open it. The capillary piping 37 is illustrated in the figure with an arrowed path flowing out of the temperature sensor 29.

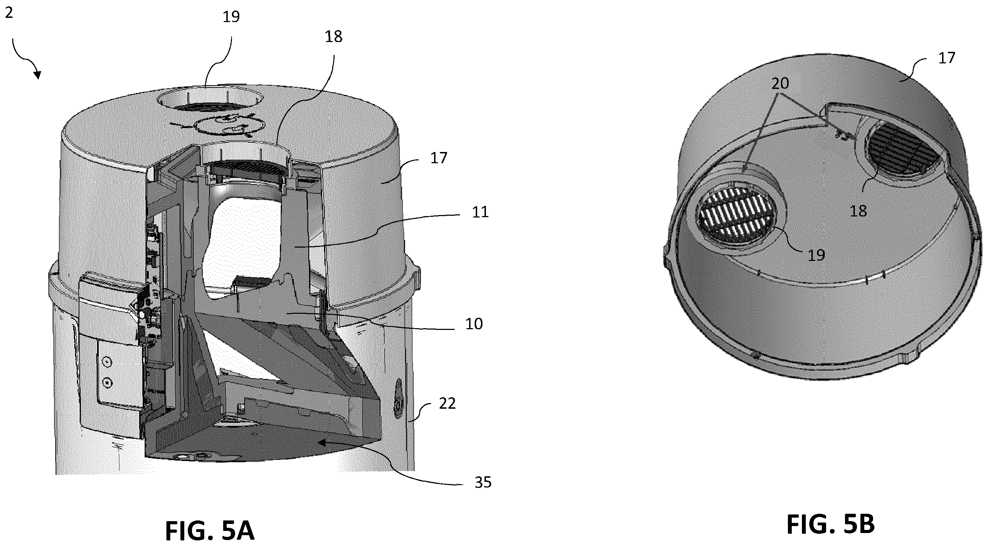

Figure 5A shows the presence of a capping element 17 that can be coupled to the upper portion of the casing 22 of the heating device 2. The capping element 17 basically covers the elements of the top of the casing 22, thereby also covering the apparatus 1, i.e., the first component 10 and the second component 11. The capping element 17 comprises a first opening 18 coupled to the air inlet 4 and a second opening 19 coupled to the air outlet 5. Figure 5A shows a sliced cross-section of the heating device 2 including the apparatus 1. The figure basically shows the presence of the first and second components 10, 11 without the evaporator 8, temperature sensor 29 and the fan element 9. It is noted that the second component 11 is connected to the first component 10 through a joint mechanism made of recessing and protruding elements and that below the first component 10 there is a lower region 35 where to arrange the condenser and the water tank (not shown in the figure). Figure 5B shows a bottom view of the cap element 17. It is noted that the first and second openings 18, 19 are provided with sealing means 20 for determining a sealed coupling with the air inlet 4 and air outlet 5 of the flow guiding apparatus 1.

### Reference Signs

- 1: Flow guiding apparatus
- 2: Heating device
- 3: Housing
- 4: Air inlet
- 5: Air outlet
- 6: Air duct
- 7: Air flow region
- 8: Heat exchanger
- 9: Fan element
- 10: First component
- 11: Second component
- 12: Condensate drain outlet
- 13: Safety drain outlet
- 14: Connecting region
- 15: Compressor element
- 16: Air flow sub-region
- 17: Capping element
- 18: First opening
- 19: Second opening
- 20: Sealing means
- 21: Water tank
- 22: Casing
- 23: First seat
- 24: Second seat
- 25: Air flow portion
- 26: Evaporator portion
- 27: Fan portion
- 28: Expansion valve
- 29: Temperature sensor
- 30: Piping portion
- 31: Piping port
- 32: Inlet piping
- 33: Outlet piping
- 34: Gasket element
- 35: Lower portion
- 36: Linear path
- 37: Capillary piping

## Claims

1. A heating device (2), in particular a heat pump water heater arranged to use a flammable refrigerant, comprising:
- at least a heat exchanger (8), a compressor element (15), an expansion valve (28) and a temperature sensor (29) connectable to the expansion valve (28) for monitoring the temperature of the refrigerant flowing out the heat exchanger (8), and further comprising:
- a flow guiding apparatus (1) comprising:
- a housing (3) couplable to a casing of the heating device (2) and comprising an air inlet (4) and an air outlet (5), the housing (3) defining an air flow region (7), wherein the housing (3) is configured so that:
- the heat exchanger (8) is arranged inside the air flow region (7) for exchanging heat in said air flow region (7), so that in operation air is guided to flow from the air inlet (4) to the heat exchanger (8) and from the heat exchanger (8) to the air outlet (5), the air being confined in the air flow region (7) and being prevented from being in contact with the compressor element (15) and the expansion valve (28) that are arranged outside the air flow region (7), and
- the temperature sensor (29) connectable to the expansion valve (29) is arranged inside the air flow region (7).

2. Heating device (2) according to claim 1, **characterized in that** the temperature sensor (29) is attached to a piping portion (30) arranged to contain the refrigerant arranged to flow from the heat exchanger (8) to the compressor element (15), and the housing (3) comprises a piping port (31) for the passage of said piping portion (30) inside the air flow region (7).

3. Heating device (2) according to claim 2, **characterized in that** the piping portion (30) comprises an inlet piping (32) and an outlet piping (33), the temperature sensor (29) being located between the inlet piping (32) and the outlet piping (33) and the piping port (31) comprises a gasket element (34) for supporting the inlet piping (32) and the outlet piping (33).

4. Heating device (2) according to any one of claims 1 to 3, **characterized in that**
a. the housing (3) is shaped to place the temperature sensor (29) in the air flow region (7) wherein the air is guided to flow from the air inlet (4) to the heat exchanger (8); and/or
b. the temperature sensor (29) is an electronic sensor or a mechanical sensor.

5. Heating device (2) according to any one of claims 1 to 4, **characterized in that** the housing (3) comprises a first component (10) for holding the heat exchanger (8) and the compressor element (15) connectable to the heating device (2) and a second component (11) connectable to the heating device (2), to form the air flow region (7).

6. Heating device (2) according to claim 5, **characterized in that**
a. the second component (11) is at least in part fixable to, and removable from, the first component (10), the first component (10) and the second component (11) being both shaped to guide air to flow from the air inlet (4) to the heat exchanger (8) and from the heat exchanger (8) to the air outlet (5); and/or
b. the first component (10) is connected to the second component (11) to form a connecting region (14) that is airtight and/or watertight; and/or
c. the first component (10) and the second component (11) are one-piece parts; and/or
d. the first component (10) and the second component (11) are both shaped to form a first seat (23), in particular for the placement of the heat exchanger (8); and/or
e. the first component (10) and the second component (11) are both shaped to form a second seat (24), in particular for the placement of a fan element (9); and/or
f. the housing (3) comprises a base component interposed between at least the first component (10) and the heating device (2) to fix said first component (10) to the heating device (2); and/or
g. the housing (3) comprises a base component interposed between at least the second component (11) and the heating device (2) to fix said second component (11) to the heating device (2); and/or
h. the first component (10) and the second component (11) form a one-piece structure.

7. Heating device (2) according to any one of claims 5 to 6, **characterized in that** the air inlet (4) and the air outlet (5) are located on the second component (11) and/or the heat exchanger (8) and the compressor element (15) are fixable to the first component (10) or to a base element interposed between at least the first component (10) and/or the second component (11), and the heating device (2).

8. Heating device (2) according to any one of claims 1 to 7, **characterized in that**
a. the apparatus (1) further comprises a condensate drain outlet (12) coupled to the heat exchanger (8) to evacuate condensate resulting from heat exchange at the heat exchanger (8); and/or
b. the apparatus (1) further comprises a safety drain outlet (13) located in a bottom region of the housing (3) to evacuate a fluid, in particular the flammable refrigerant, from the air flow region (7) to the outside; and/or
c. the air inlet (4) and the air outlet (5) are both located in a top or lateral region of the housing (3); and/or
d. the housing (3) is made of a polymeric material, in particular of foam plastic, more particularly of polypropylene expanded (PPE).

9. Heating device (2) according to any one of claims 1 to 8, **characterized in that** an air duct (6) connecting the air inlet (4) to the air outlet (5) comprises a variable cross-section, wherein in particular the cross-section of the air duct (6) at the air inlet (4) and at the air outlet (5) is different from the cross-section at the heat exchanger (8), wherein in particular the cross-section of the air duct (6) at the air inlet (4) and at the air outlet (5) is circular and the cross-section at the heat exchanger (8) is polygonal.

10. Heating device (2) according to any one of claims 1 to 9, **characterized in that** the heating device (2) further comprises at least a fan element (9), in particular a brushless fan, arranged inside the air flow region (7) and coupled to the heat exchanger (8), wherein in particular the air flow region (7) comprises an air flow sub-region (16) located between the fan element (9) and the heat exchanger (8), the housing (3) in said air flow sub-region (16) being shaped to guide air from the heat exchanger (8) to the air outlet (5).

11. Heating device (2) according to any one of claims 1 to 10, **characterized in that**
a. any ignition source is arranged outside the air flow region (7) and/or
b. at least a portion of the housing (3) is part of the heating device (2).

12. Heating device (2) according to any of claims 1 to 11, **characterized in that**
a. the temperature sensor (29) is attached to a piping portion (30) with a material having a thermal conductivity higher than 1 W/(m*K); and/or
b. temperature sensor (29) is covered by a thermal insulation material, in particular an insulation foam, wherein in particular the thermal insulation material has a thermal conductivity lower than 0.1 W/(m*K); and/or
c. a piping portion (30) on which the temperature sensor (29) is attached has a length of at least 5 cm.

13. Heating device (2) according to any of claims claim 1 to 12, further comprising a capping element (17) configured to be coupled to a top region of the heating device (2) and covering the housing (3) of the apparatus (1), the capping element (17) comprising a first opening (18) coupled to the air inlet (4) of the housing (3) and a second opening (19) coupled to the air outlet (5) of the housing (3), wherein between the first opening (18) and the air inlet (4) and between the second opening (19) and the air outlet (5) are provided sealing means (20).

## Patentansprüche

1. Heizvorrichtung (2), insbesondere ein Wärmepumpen-Warmwasserbereiter, der angeordnet ist, um ein brennbares Kältemittel zu verwenden, umfassend:
- mindestens einen Wärmetauscher (8), ein Kompressorelement (15), ein Expansionsventil (28) und einen mit dem Expansionsventil (28) verbindbaren Temperatursensor (29) zur Überwachung der Temperatur des aus dem Wärmetauscher (8) austretenden Kältemittels, und ferner umfassend:
- eine Strömungsleitvorrichtung (1), umfassend:
- ein Gehäuse (3), das mit einem Gehäuse der Heizvorrichtung (2) koppelbar ist und einen Lufteinlass (4) sowie einen Luftauslass (5) umfasst, wobei das Gehäuse (3) einen Luftströmungsbereich (7) definiert, wobei das Gehäuse (3) so konfiguriert ist, dass:
- der Wärmetauscher (8) innerhalb des Luftströmungsbereichs (7) angeordnet ist, um in dem Luftströmungsbereich (7) Wärme auszutauschen, so dass im Betrieb Luft so geleitet wird, dass sie vom Lufteinlass (4) zum Wärmetauscher (8) und vom Wärmetauscher (8) zum Luftauslass (5) strömt, wobei die Luft im Luftströmungsbereich (7) eingeschlossen ist und daran gehindert wird, mit dem Kompressorelement (15) und dem Expansionsventil (28) in Kontakt zu kommen, die außerhalb des Luftströmungsbereichs (7) angeordnet sind, und
- der mit dem Expansionsventil (29) verbindbare Temperatursensor (29) innerhalb des Luftströmungsbereichs (7) angeordnet ist.

2. Heizvorrichtung (2) nach Anspruch 1, **dadurch gekennzeichnet, dass** der Temperatursensor (29) an einem Leitungsabschnitt (30) angebracht ist, der so angeordnet ist, dass er das Kältemittel aufnimmt, das angeordnet ist, um vom Wärmetauscher (8) zum Kompressorelement (15) zu strömen, und dass das Gehäuse (3) eine Leitungsöffnung (31) für den Durchgang des Leitungsabschnitts (30) innerhalb des Luftströmungsbereichs umfasst (7).

3. Heizvorrichtung (2) nach Anspruch 2, **dadurch gekennzeichnet, dass** der Leitungsabschnitt (30) eine Einlassleitung (32) und eine Auslassleitung (33) umfasst, wobei der Temperatursensor (29) zwischen der Einlassleitung (32) und der Auslassleitung (33) angeordnet ist und die Leitungsöffnung (31) ein Dichtungselement (34) zum Unterstützen der Einlassleitung (32) und der Auslassleitung (33) umfasst.

4. Heizvorrichtung (2) nach einem der Ansprüche 1 bis 3, **dadurch gekennzeichnet, dass**
a. das Gehäuse (3) so geformt ist, dass der Temperatursensor (29) in den Luftströmungsbereich (7) platziert wird, wobei die Luft geleitet wird, um vom Lufteinlass (4) zum Wärmetauscher (8) zu strömen; und/oder
b. der Temperatursensor (29) ein elektronischer Sensor oder ein mechanischer Sensor ist.

5. Heizvorrichtung (2) nach einem der Ansprüche 1 bis 4, **dadurch gekennzeichnet, dass** das Gehäuse (3) eine erste Komponente (10) zur Aufnahme des Wärmetauschers (8) und des mit der Heizvorrichtung (2) verbindbaren Kompressorelements (15) sowie eine zweite Komponente (11) umfasst, die mit der Heizvorrichtung (2) verbindbar ist, um den Luftströmungsbereich (7) zu bilden.

6. Heizvorrichtung (2) nach Anspruch 5, **dadurch gekennzeichnet, dass**
a. die zweite Komponente (11) zumindest teilweise an der ersten Komponente (10) fixierbar und von dieser abnehmbar ist, wobei sowohl die erste Komponente (10) als auch die zweite Komponente (11) so geformt sind, dass sie die Luft leiten, um vom Lufteinlass (4) zum Wärmetauscher (8) und vom Wärmetauscher (8) zum Luftauslass (5) zu strömen; und/oder
b. die erste Komponente (10) mit der zweiten Komponente (11) verbunden ist, um einen luft- und/oder wasserdichten Verbindungsbereich (14) zu bilden; und/oder
c. die erste Komponente (10) und die zweite Komponente (11) einteilige Teile sind; und/oder
d. die erste Komponente (10) und die zweite Komponente (11) beide so geformt sind, dass sie einen ersten Sitz (23) bilden, insbesondere zur Aufnahme des Wärmetauschers (8); und/oder
e. sowohl die erste Komponente (10) als auch die zweite Komponente (11) so geformt sind, dass sie einen zweiten Sitz (24) bilden, insbesondere zur Aufnahme eines Lüfterelements (9); und/oder
f. das Gehäuse (3) eine Basiskomponente umfasst, die zwischen mindestens der ersten Komponente (10) und der Heizvorrichtung (2) zwischengesetzt ist, um die erste Komponente (10) an der Heizvorrichtung (2) zu fixieren; und/oder
g. das Gehäuse (3) eine Basiskomponente umfasst, die zwischen mindestens der zweiten Komponente (11) und der Heizvorrichtung (2) zwischengesetzt ist, um die zweite Komponente (11) an der Heizvorrichtung (2) zu fixieren; und/oder
h. die erste Komponente (10) und die zweite Komponente (11) eine einteilige Struktur bilden.

7. Heizvorrichtung (2) nach einem der Ansprüche 5 bis 6, **dadurch gekennzeichnet, dass** sich der Lufteinlass (4) und der Luftauslass (5) an der zweiten Komponente (11) befinden und/oder der Wärmetauscher (8) und das Kompressorelement (15) an der ersten Komponente (10) oder an einem zwischengesetzten Basiselement fixierbar sind, das zwischen mindestens der ersten Komponente (10) und/oder der zweiten Komponente (11) zwischengesetzt ist, und der Heizvorrichtung (2).

8. Heizvorrichtung (2) nach einem der Ansprüche 1 bis 7, **dadurch gekennzeichnet, dass**
a. die Vorrichtung (1) ferner einen Kondensatablauf (12) umfasst, der mit dem Wärmetauscher (8) gekoppelt ist, um das beim Wärmeaustausch am Wärmetauscher (8) entstehende Kondensat abzuführen; und/oder
b. die Vorrichtung (1) ferner einen Sicherheitsablauf (13) umfasst, der in einem unteren Bereich des Gehäuses (3) angeordnet ist, um ein Fluid, insbesondere das brennbare Kältemittel, aus dem Luftströmungsbereich (7) nach außen abzuführen; und/oder
c. der Lufteinlass (4) und der Luftauslass (5) sich beide in einem oberen oder seitlichen Bereich des Gehäuses (3) befinden; und/oder
d. das Gehäuse (3) aus einem polymeren Material, insbesondere aus Schaumkunststoff, genauer aus expandiertem Polypropylen (PPE), besteht.

9. Heizvorrichtung (2) nach einem der Ansprüche 1 bis 8, **dadurch gekennzeichnet, dass** ein den Lufteinlass (4) mit dem Luftauslass (5) verbindender Luftkanal (6) einen variablen Querschnitt umfasst, wobei insbesondere der Querschnitt des Luftkanals (6) am Lufteinlass (4) und am Luftauslass (5) sich vom Querschnitt des Wärmetauschers (8) unterscheidet, wobei insbesondere der Querschnitt des Luftkanals (6) am Lufteinlass (4) und am Luftauslass (5) kreisförmig ist und der Querschnitt am Wärmetauscher (8) polygonal ist.

10. Heizvorrichtung (2) nach einem der Ansprüche 1 bis 9, **dadurch gekennzeichnet, dass** die Heizvorrichtung (2) weiter mindestens ein Lüfterelement (9), insbesondere einen bürstenlosen Lüfter, umfasst, das innerhalb des Luftströmungsbereichs (7) angeordnet und mit dem Wärmetauscher (8) gekoppelt ist, wobei insbesondere der Luftströmungsbereich (7) einen zwischen dem Lüfterelement (9) und dem Wärmetauscher (8) angeordneten Luftströmungs-Unterbereich (16) umfasst, wobei das Gehäuse (3) in dem Luftstrom-Unterbereich (16) so geformt ist, dass es Luft vom Wärmetauscher (8) zum Luftauslass (5) leitet.

11. Heizvorrichtung (2) nach einem der Ansprüche 1 bis 10, **dadurch gekennzeichnet, dass**
a. eine Zündquelle außerhalb des Luftströmungsbereichs (7) angeordnet ist und/oder
b. mindestens ein Abschnitt des Gehäuses (3) Bestandteil der Heizvorrichtung (2) ist.

12. Heizvorrichtung (2) nach einem der Ansprüche 1 bis 11, **dadurch gekennzeichnet, dass**
a. der Temperatursensor (29) an einen Leitungsabschnitt (30) mit einem Material mit einer Wärmeleitfähigkeit von mehr als 1 W/(m*K) befestigt ist; und/oder
b. der Temperatursensor (29) von einem Wärmeisolationsmaterial, insbesondere einem Isolierschaum, ummantelt ist, wobei das Wärmeisolationsmaterial insbesondere eine Wärmeleitfähigkeit von weniger als 0,1 W/(m*K) aufweist; und/oder
c. ein Leitungsabschnitt (30), an dem der Temperatursensor (29) angebracht ist, eine Länge von mindestens 5 cm aufweist.

13. Heizvorrichtung (2) nach einem der Ansprüche 1 bis 12, ferner umfassend ein Abdeckelement (17), das so konfiguriert ist, dass es mit einem oberen Bereich der Heizvorrichtung (2) gekoppelt wird und das Gehäuse (3) der Vorrichtung (1) abdeckt, wobei das Abdeckelement (17) eine erste Öffnung (18), die mit dem Lufteinlass (4) des Gehäuses (3) gekoppelt ist, und eine zweite Öffnung (19) aufweist, die mit dem Luftauslass (5) des Gehäuses (3) gekoppelt ist, wobei zwischen der ersten Öffnung (18) und dem Lufteinlass (4) sowie zwischen der zweiten Öffnung (19) und dem Luftauslass (5) Dichtungsmittel (20) bereitgestellt sind.

## Revendications

1. Dispositif de chauffage (2), notamment chauffe-eau à pompe à chaleur, agencé pour utiliser un réfrigérant inflammable, comprenant :
- au moins un échangeur de chaleur (8), un élément de compresseur (15), une vanne de détente (28) et un capteur de température (29) pouvant être raccordé à la vanne de détente (28) pour surveiller la température du réfrigérant sortant de l'échangeur de chaleur (8), et comprenant en outre :
- un appareil de guidage d'écoulement (1) comprenant :
- un logement (3) pouvant être accouplé à un boîtier du dispositif de chauffage (2) et comprenant une entrée d'air (4) et une sortie d'air (5), le logement (3) délimitant une région d'écoulement d'air (7), le logement (3) étant conçu de manière à ce que :
- l'échangeur de chaleur (8) soit agencé à l'intérieur de la région d'écoulement d'air (7) pour échanger de la chaleur dans ladite région d'écoulement d'air (7), de sorte qu'en fonctionnement, l'air soit guidé pour s'écouler de l'entrée d'air (4) à l'échangeur de chaleur (8) et de l'échangeur de chaleur (8) à la sortie d'air (5), l'air étant confiné dans la région d'écoulement d'air (7) et empêché d'entrer en contact avec l'élément de compresseur (15) et la vanne de détente (28) qui sont agencés à l'extérieur de la région d'écoulement d'air (7), et
- le capteur de température (29) pouvant être raccordé à la vanne de détente (29) est agencé à l'intérieur de la région d'écoulement d'air (7).

2. Dispositif de chauffage (2) selon la revendication 1, **caractérisé en ce que** le capteur de température (29) est attaché à une portion de tuyauterie (30) agencée pour contenir le réfrigérant agencé pour s'écouler de l'échangeur de chaleur (8) à l'élément de compresseur (15), et le logement (3) comprend un orifice de tuyauterie (31) pour le passage de ladite portion de tuyauterie (30) à l'intérieur de la région d'écoulement d'air (7).

3. Dispositif de chauffage (2) selon la revendication 2, **caractérisé en ce que** la portion de tuyauterie (30) comprend une tuyauterie d'entrée (32) et une tuyauterie de sortie (33), le capteur de température (29) étant situé entre la tuyauterie d'entrée (32) et la tuyauterie de sortie (33) et l'orifice de tuyauterie (31) comprend un élément de joint (34) pour supporter la tuyauterie d'entrée (32) et la tuyauterie de sortie (33).

4. Dispositif de chauffage (2) selon l'une quelconque des revendications 1 à 3, **caractérisé en ce que**
a. le logement (3) est conçu pour placer le capteur de température (29) dans la région d'écoulement d'air (7), dans lequel l'air est guidé pour s'écouler de l'entrée d'air (4) vers l'échangeur de chaleur (8) ; et/ou
b. le capteur de température (29) est un capteur électronique ou un capteur mécanique.

5. Dispositif de chauffage (2) selon l'une quelconque des revendications 1 à 4, **caractérisé en ce que** le logement (3) comprend un premier composant (10) destiné à contenir l'échangeur de chaleur (8) et l'élément de compresseur (15) pouvant être raccordé au dispositif de chauffage (2) et un second composant (11) pouvant être raccordé au dispositif de chauffage (2), pour former la région d'écoulement d'air (7).

6. Dispositif de chauffage (2) selon la revendication 5, **caractérisé en ce que**
a. le second composant (11) peut, au moins en partie, être fixé au premier composant (10) et retiré de celui-ci, le premier composant (10) et le second composant (11) étant tous deux conçus pour guider de l'air de manière à ce qu'il s'écoule, de l'entrée d'air (4) vers l'échangeur de chaleur (8) et de l'échangeur de chaleur (8) vers la sortie d'air (5) ; et/ou
b. le premier composant (10) est raccordé au second composant (11) pour former une région de raccordement (14) qui est étanche à l'air et/ou à l'eau ; et/ou
c. le premier composant (10) et le second composant (11) sont des pièces monoblocs ; et/ou
d. le premier composant (10) et le second composant (11) sont tous deux conçus pour former un premier support (23), notamment pour la mise en place de l'échangeur de chaleur (8) ; et/ou
e. le premier composant (10) et le second composant (11) sont tous deux conçus pour former un second support (24), notamment pour la mise en place d'un élément de ventilateur (9) ; et/ou
f. le logement (3) comprend un composant de base interposé entre au moins le premier composant (10) et le dispositif de chauffage (2) afin de fixer ledit premier composant (10) au dispositif de chauffage (2) ; et/ou
g. le logement (3) comprend un composant de base interposé entre au moins le second composant (11) et le dispositif de chauffage (2) afin de fixer ledit second composant (11) au dispositif de chauffage (2) ; et/ou
h. le premier composant (10) et le second composant (11) forment une structure monobloc.

7. Dispositif de chauffage (2) selon l'une quelconque des revendications 5 à 6, **caractérisé en ce que** l'entrée d'air (4) et la sortie d'air (5) sont situées sur le second composant (11) et/ou **en ce que** l'échangeur de chaleur (8) et l'élément de compresseur (15) peuvent être fixés au premier composant (10) ou à un élément de base interposé entre au moins le premier composant (10) et/ou le second composant (11), et le dispositif de chauffage (2).

8. Dispositif de chauffage (2) selon l'une quelconque des revendications 1 à 7, **caractérisé en ce que**
a. l'appareil (1) comprend en outre une sortie d'évacuation de condensats (12) accouplée à l'échangeur de chaleur (8) pour évacuer les condensats provenant de l'échange de chaleur au niveau de l'échangeur de chaleur (8) ; et/ou
b. l'appareil (1) comprend en outre une sortie d'évacuation de sécurité (13) située dans une région de fond du logement (3) pour évacuer un fluide, notamment le réfrigérant inflammable, de la région d'écoulement d'air (7) vers l'extérieur ; et/ou
c. l'entrée d'air (4) et la sortie d'air (5) sont toutes deux situées dans une région supérieure ou latérale du logement (3) ; et/ou
d. le logement (3) est fait d'un matériau polymère, notamment de mousse plastique, plus particulièrement de polypropylène expansé (PPE).

9. Dispositif de chauffage (2) selon l'une quelconque des revendications 1 à 8, **caractérisé en ce qu'**un conduit d'air (6) raccordant l'entrée d'air (4) à la sortie d'air (5) comprend une section transversale variable, dans lequel, notamment, la section transversale du conduit d'air (6) au niveau de l'entrée d'air (4) et de la sortie d'air (5) est différente de la section transversale au niveau de l'échangeur de chaleur (8), dans lequel, notamment, la section transversale du conduit d'air (6) au niveau de l'entrée d'air (4) et de la sortie d'air (5) est circulaire et la section transversale au niveau de l'échangeur de chaleur (8) est polygonale.

10. Dispositif de chauffage (2) selon l'une quelconque des revendications 1 à 9, **caractérisé en ce que** le dispositif de chauffage (2) comprend en outre au moins un élément de ventilateur (9), notamment un ventilateur sans balais, agencé à l'intérieur de la région d'écoulement d'air (7) et accouplé à l'échangeur de chaleur (8), dans lequel, notamment, la région d'écoulement d'air (7) comprend une sous-région d'écoulement d'air (16) située entre l'élément de ventilateur (9) et l'échangeur de chaleur (8), le logement (3) dans ladite sous-région d'écoulement d'air (16) étant conçu pour guider l'air de l'échangeur de chaleur (8) vers la sortie d'air (5).

11. Élément de chauffage (2) selon l'une quelconque des revendications 1 à 10, **caractérisé en ce qu'**
a. une quelconque source d'allumage est agencée à l'extérieur de la région d'écoulement d'air (7) et/ou
b. au moins une portion du logement (3) fait partie du dispositif de chauffage (2).

12. Dispositif de chauffage (2) selon l'une quelconque des revendications 1 à 11, **caractérisé en ce que**
a. le capteur de température (29) est attaché à une portion de tuyauterie (30) dont le matériau présente une conductivité thermique supérieure à 1 W/(m*K) ; et/ou
b. le capteur de température (29) est recouvert d'un matériau d'isolation thermique, notamment d'une mousse isolante, dans lequel, notamment, le matériau d'isolation thermique présente une conductivité thermique inférieure à 0,1 W/(m*K) ; et/ou
c. une portion de tuyauterie (30) sur laquelle est attaché le capteur de température (29) a une longueur d'au moins 5 cm.

13. Dispositif de chauffage (2) selon l'une quelconque des revendications 1 à 12, comprenant en outre un élément de recouvrement (17) conçu pour être accouplé à une région supérieure du dispositif de chauffage (2) et couvrant le logement (3) de l'appareil (1), l'élément de recouvrement (17) comprenant une première ouverture (18) accouplée à l'entrée d'air (4) du logement (3) et une seconde ouverture (19) accouplée à la sortie d'air (5) du logement (3), dans lequel, entre la première ouverture (18) et l'entrée d'air (4) et entre la seconde ouverture (19) et la sortie d'air (5) sont disposés des moyens d'étanchéité (20).
